(19) Europäisches Patentamt
European Patent Office
Office européen des brevets

(11) EP 0 800 691 B1

## (12) FASCICULE DE BREVET EUROPEEN

(45) Date de publication et mention
de la délivrance du brevet:
**14.04.1999 Bulletin 1999/15**

(51) Int Cl.[6]: **G07F 7/10**, H04L 9/06,
H04L 9/30

(21) Numéro de dépôt: **95943279.0**

(22) Date de dépôt: **26.12.1995**

(86) Numéro de dépôt international:
**PCT/FR95/01735**

(87) Numéro de publication internationale:
**WO 96/20461 (04.07.1996 Gazette 1996/30)**

(54) **PROCEDE POUR LA MISE EN OEUVRE D'UN PROTOCOLE DE COMMUNICATION A CLE SECRETE ENTRE DEUX DISPOSITIFS DE TRAITEMENT**

VERFAHREN ZUM DURCHFÜHREN EINES KOMMUNIKATIONSPROTOKOLLES MIT GEHEIMSCHLÜSSEL ZWISCHEN ZWEI VERARBEITUNGSVORRICHTUNGEN

METHOD FOR IMPLEMENTING A PRIVATE KEY COMMUNICATION PROTOCOL BETWEEN TWO PROCESSING DEVICES

(84) Etats contractants désignés:
**AT BE CH DE DK ES FR GB GR IE IT LI LU MC NL PT SE**

(30) Priorité: **28.12.1994 FR 9415804**

(43) Date de publication de la demande:
**15.10.1997 Bulletin 1997/42**

(73) Titulaire: **GEMPLUS**
**13420 Gemenos (FR)**

(72) Inventeurs:
• M'RAIHI, David
F-75011 Paris (FR)
• NACCACHE, David
F-75009 Paris (FR)

(56) Documents cités:
EP-A- 0 252 499          WO-A-91/18459
DE-A- 4 107 266          FR-A- 2 566 155

## Description

La présente invention a pour objet un procédé pour la mise en oeuvre d'un protocole de communication entre deux dispositifs de traitement dont l'un au moins est un support de mémorisation portable tel qu'une carte à puce.

La confidentialité des informations reste à l'heure actuelle une préoccupation majeure. Il apparaît clairement que l'information sous toutes ses formes possède une valeur intrinsèque bien que parfois difficile à évaluer. La richesse d'une entreprise, d'un état même, réside ainsi pour une bonne part dans cette masse croissante de documents papiers et électroniques contenant le condensé de son activité passée, présente et même future. Les documents papiers dont la teneur justifiait une protection étaient cachés, dissimulés dans des endroits dont l'accès était rendu le plus difficile possible. L'extension du courrier et de l'archivage électronique renouvelle le problème et induit la recherche de solutions pouvant répondre au même besoin de se protéger.

La réponse apportée dans ce domaine repose sur la notion de partage à un moment donné d'une information secrète par un groupe de personnes. Les procédés mis en oeuvre jusqu'à présent sont basés sur des opérations simples pouvant être implémentées sur n'importe quel dispositif capable d'opérations élémentaires (addition binaire, décalage, permutations...).

La nature même de ces procédés implique un travail de conception long et particulièrement minutieux afin de construire une machine dont la logique ne pourra que très difficilement être prise en défaut et en tous les cas jamais de façon fatale. Le secret sur lequel repose toute la sécurité du système serait en effet divulgué dans le cas contraire et cette divulgation entraînerait alors la faillite du dit système.

La construction de protocoles efficaces représente donc un investissement en temps et en ressources particulièrement lourd. Enfin la recherche d'une adaptabilité maximale conduit à une limitation des performances d'autant plus grande que la quantité d'information à traiter est importante.

La présente invention permet de résoudre ce problème et en particulier de supprimer les contraintes de fabrication entraînées par le fait que toute la fiabilité du système ne repose que sur le caractère secret des informations gardées par ce matériel.

Selon l'invention, on propose de répartir cette contrainte d'une part sur le secret gardé et d'autre part sur les traitements effectués c'est à dire sur le protocole lui-même.

A cette fin, selon l'invention, le procédé permet de réaliser des protocoles cryptographiques à clef secrète durcis grâce à l'utilisation de ressources (matérielles ou logicielles) initialement dévolues à la réalisation de calculs complexes ( par exemple des opérations mettant en oeuvre le calcul modulaire) dans le cadre de protocoles cryptographiques à clef publique (DH, El Gamal, Schnorr, Fiat-Shamir, etc...).

Des dispositifs équipés de ressources de calcul permettant de réaliser des opérations complexes (comme le calcul modulaire par exemple) sont connus à ce jour, on peut citer à titre d'exemple les circuits tels que le circuit ST16CF54 de la Société Thomson, 83C852/5 de la société Philips ou le SLE 44CP200.

Selon l'invention on utilise une telle ressource de façon judicieuse, c'est à dire en utilisant des opérations prenant peu de temps mais dont les effets sur les données sont efficaces en terre de déformation de l'information traitée. Le principe est de combiner des opérations faisant appel à la fois aux ressources dédiées à des opérations complexes et au coeur du dispositif lui-même, quel que soit sa nature, simple micro-contrôleur de type 8051 ou 6805, processeurs de la famille 80x86 ou 680x0, processeurs évolués (PENTIUM, puces Alpha, SUN ou RISC) et processeurs parallèles (machine HYPERCUBE par exemple) en combinant les informations en clair avec une clef secrète afin d'obtenir un message chiffré que seule une personne capable de reconstituer le secret peut déchiffrer.

Ainsi l'invention propose un système extrêmement sécurisé dans lequel le calcul modulaire pourra porter sur un grand nombre par exemple 80 bits, 160 bits ou 512 bits ou plus et ne nécessitant que la combinaison de deux opérations.

La présente invention a plus particulièrement pour objet un procédé pour la mise en oeuvre d'un protocole à clef secrète entre deux dispositifs de traitement, l'un d'entre-eux aux moins étant un support de mémorisation portable. Le procédé comprend les étapes suivantes selon le document WO-A-9 118 459.

- équiper les dispositifs d'un circuit de traitement numérique apte à réaliser des opérations de type calcul modulaire pour la mise en oeuvre d'opérations telles que la multiplication modulaire,
- utiliser ce circuit de traitment pour mettre en oeuvre une fonction de chiffrement à clé secrète composée d'une succession d'opérations réversibles comportant au moins la combinaison de deux opérations, l'une de type calcul modulaire et l'autre relevant de la logique binaire,
- appliquer cette fonction soit sur des messages destinés à être transmis pour les chiffrer ou les signer, soit sur des messages reçus pour les déchiffrer.
- le circuit de traitement numérique réalise préalablement à tout traitement un découpage en blocs de N bits.

Le procédé est caractérisé tel que défini par la partie caractérisante de la revendication 1 ou de la revendication 5.

L'utilisateur peut choisir $K_1 \neq K_2$ ou $K_1 = K_2$.

Selon un autre aspect de l'invention, lorsqu'un dispositif envoie des messages, il opère sur le message un premier traitement consistant à appliquer sur chaque bloc $x_i$ la fonction choisie f de façon itérative.

De préférence on utilisera un nombre p d'itérations au moins égal à 4.

Ainsi selon un premier mode de réalisation $A_j$ et $A_k$ communiquent entre-eux selon le protocole suivant :

- le dispositif $A_j$ chiffre chaque bloc x du message M préalablement découpé en q + 1 blocs de N bits de sorte que chaque bloc chiffré y du message soit tel que :

$$E(x) = f^p(x) \oplus K \bmod n = y,$$

p étant supérieur ou égal à 4,
- le dispositif $A_j$ envoie les q+1 blocs chiffrés y au dispositif $A_k$,
- le dispositif $A_k$ effectue sur chaque y l'opération suivante :

$$D(y) = g^p(y) \oplus K \bmod n = x,$$

pour réaliser le déchiffrement du bloc y,
de manière à déchiffrer y et à obtenir x, la fonction g étant la fonction inverse de f telle que :

$$g(y) = (y * K^{-1} \bmod n) \oplus K,$$

y représentant un bloc de N bits du chiffré.

La puissance p indique que l'on compose p fois les fonctions f et g de la manière suivante: $f^p(x) = f(f(f( f(x)) ))$. On applique donc de façon itérative la fonction f. Le nombre d'itérations proposé garantit la sécurité du protocole. De façon pratique le hachage du message consistera par exemple à effectuer les étapes suivantes :

$$E(x_i) = f^4(x_i) \oplus K \bmod n$$

①On calcule le chiffré $y_1$ du premier bloc $x_1$ du message : $y_1 = E(x_1)$
②On effectue pour le reste des blocs $x_i$ du message le calcul suivant :
$y_i = E(x_i \oplus y_{i-1}) \oplus y_{i-1}$ et on prend le dernier bloc comme valeur haché du message.

Selon un autre mode de réalisation, lorsque les dispositifs $A_j$ et $A_k$ communiquent entre eux le dispositif Aj découpe au préalable le message en q+1 blocs de N bits et place les blocs dans deux registres . Un bloc $x_i$ d'un message est placé dans un premier registre, le bloc suivant $x_{i+1}$ est placé dans un deuxième registre. Lorsque le dispositif $A_j$ envoie un message, il opère un chiffrement sur ce message avec une fonction f de chiffrement de sorte que :

- $E(x_i, x_{i+1}) = f^p(x_i, x_{i+1})$
- avec $f(x_i, x_{i+1}) = y_i, y_{i+1}$
- où $y_i = x_{i+1}$
- $y_{i+1} = X_i \oplus ((y_i \oplus K_2) * K_1 \bmod n)$

- le dispositif $A_j$ envoie les q+1 blocs y au dispositif $A_k$.
- le dispositif $A_k$ effectue sur chaque bloc $y_i$ l'opération suivante :

$$D(y_i, y_{i+1}) = g^p(y_i, y_{i+1})$$

de manière à déchiffrer $(y_i, y_{i+1})$ et d'obtenir $(x_i, x_{i+1})$, la fonction g étant la fonction inverse de f, cette fonction étant définie par :

$$g\,(y_i,\,y_{i+1}) = x_i,\,x_{i+1}$$

où $x_{i+1} = y_i$
et

$$x_i = y_{i+1} \oplus ((x_{i+1} \oplus K_2) * K_1 \bmod n) = y_{i+1} \oplus ((y_i \oplus K_2) * K_1 \bmod n)$$

- le dispositif $A_k$ reconstituant ainsi le message.

L'application inverse permettant le déchiffrement est exactement du même type que l'application directe. Il est donc possible de construire un système de chiffrement symétrique en composant plusieurs fonctions f comme ci-dessus.

Dans ce cas le nombre d'itérations sera choisi supérieur ou égal à huit afin de donner au schéma une sécurité équivalente à la première solution.

Le protocole basé sur cette fonction permettant le chiffrement d'un bloc x et le déchiffrement d'un bloc y du chiffré sera le suivant :

$$E(x) = f^8(x) \oplus K \bmod n = y,$$

pour réaliser le chiffrement du bloc x,

$$D(y) = g^8(y) \oplus K \bmod n = x,$$

pour réaliser le déchiffrement du bloc y,

avec g l'inverse de f comme définie ci-dessus,
y représentant un bloc de N bits du chiffré.

Les fonctions de chiffrement décrites précédemment pourront être utilisées pour hacher des messages de longueur quelconque.

Le hachage d'un message s'effectue en combinant les valeurs bloc à bloc chiffré pour ne conserver que la dernière valeur chiffrée qui représente la valeur hachée du message.

De façon pratique, le hachage du message consistera à réaliser les étapes suivantes :

$$E(x_i,\,x_{i+1}) = f^8(x_i,\,x_{i+1})$$

① On calcule le chiffré $(y_1,\,y_2)$ des deux premiers blocs $(x_1,\,x_2)$ du message : $y_1,\,y_2 = E(x_1,x_1)$.
② On effectue pour le reste des paires de blocs $(x_i,\,x_{i+1})$ du message le calcul suivant :

$$y_i,\,Y_{i+1} = E(x_i \oplus y_{i-2},\,x_{i+1} \oplus y_{i-1}) \oplus (y_{i-2},\,y_{i-1})$$

et on prend le dernier bloc comme valeur haché du message.

La longueur N en bits du modulo, des clefs et des blocs à chiffrer ou à hacher sera de façon préférentielle, suivant les dispositifs mis en oeuvre, de 80 bits ou 160, 512, 640, 1024 ou plus. Le nombre utilisé comme modulo sera impair.

De façon préférentielle également, on utilisera le nombre $n = 2^N -1$. Les appareils portables seront des cartes à puces ou des cartes PCMCIA, des badges, des cartes sans contact ou tout autre appareil équipé d'un module de sécurité.

Les signaux échangés pourront être des signaux électriques ou des signaux infrarouges ou des ondes radio.

D'autres particularités et avantages de l'invention apparaîtront plus clairement à partir de la description qui est faite à titre indicatif et nullement limitatif et en regard des dessins sur lesquels :

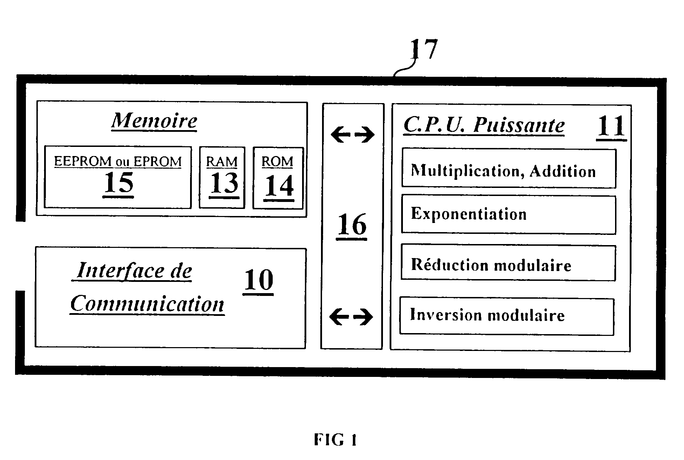

La **figure 1** représente un schéma de principe d'un dispositif mettant en oeuvre le procédé selon la présente invention.

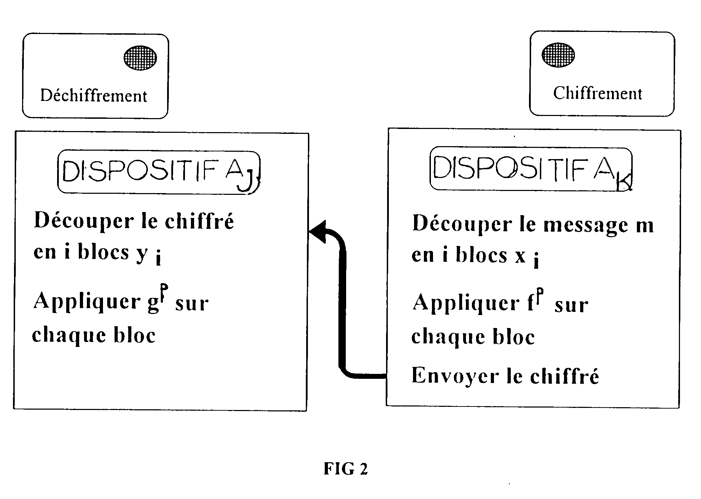

La **figure 2** représente les données transmises entre un dispositif Aj et un autre dispositif Ak utilisant un circuit de traitement numérique selon l'invention, pendant une phase de chiffrement/déchiffrement d'un message.

Dans toute la suite de la description on prendra comme exemple de dispositif de traitement le cas de cartes à puce afin de simplifier l'exposé.

Selon l'invention proposée, chaque carte à puce se compose d'une unité de traitement CPU 11, d'une interface de communication 10, d'une mémoire vive (RAM) et/ou d'une mémoire non inscriptible (ROM) 14 et/ou d'une mémoire inscriptible (généralement ré inscriptible) (EPROM ou EEPROM) 15.

Chaque carte peut effectuer le chiffrement et/ou le déchiffrement de messages suivant les procédures proposées.

L'unité CPU 11 et/ou la mémoire ROM 14 de la carte à puce contiennent des programmes ou des ressources de calcul permettant d'effectuer rapidement des opérations arithmétiques sur les grands nombres et notamment des multiplications, calcul d'inverse et réductions modulaires. De façon connue, on peut prévoir de regrouper certaines de ces opérations (par exemple, la réduction modulaire peut-être directement intégrée dans la multiplication).

De même que pour l'implémentation d'un algorithme tel que le DES, la mémoire RAM contient le bloc x sur N bits du message M que l'on doit chiffrer. La mémoire E(E)PROM 15 contient les clefs K, $K_1$ et $K_2$.

L'unité CPU 11 commande de manière connue, via les bus d'adresse et de données 16, l'interface de communication 10, les opérations de lecture et d'écriture en mémoire 13, 14 et 15.

Chaque carte à puce est protégée du monde extérieur par des protections physiques 17. Ces protections devraient être suffisantes pour empêcher toute entité non autorisée d'obtenir la clef secrète K.

Les techniques les plus utilisées de nos jours en la matière sont l'intégration de la puce dans un module de sécurité et l'équipement des puces de dispositifs capables de détecter des variations de température, de lumière ainsi que des tensions et des fréquences d'horloge anormales. Des techniques de conception particulières, mais connues, telles que l'embrouillage de l'accès mémoire sont également utilisées.

Un dispositif utilisant un module de sécurité possédant les mêmes fonctionnalités qu'une carte à puce pourra effectuer les opérations de chiffrement et de déchiffrement de la même manière.

Dans le cadre général de l'invention proposée, la mise en oeuvre d'un algorithme de chiffrement symétrique utilisant des ressources normalement dévolues à des opérations de type cryptographie à clef publique est réalisée en opérant les traitements qui vont suivre et en échangeant entre la carte et le dispositif vérifieur qui selon l'invention peut être une autre carte, au moins les signaux suivants :

Au préalable le dispositif réalisant le chiffrement d'un message de longueur L découpe le message pour obtenir (q+1) blocs de N bits. (Si L = (q ∗ N + r) bits, avec r < N, le dispositif découpe le message en q+1 blocs, soit q blocs de longueur N bits et un bloc de r bits.

Il complète le $(q+1)^{\text{ième}}$ bloc avec des zéros de manière à avoir q+1 blocs de N bits, puis il chiffre chaque bloc $x_i$ en effectuant le calcul suivant :

$$E(x_i) = f^4(x_i) \oplus K \bmod n = y_i$$

avec :

$$f(x_i) = (x_i \oplus K) \ast K \bmod n$$
K représente la clef secrète sur N bits
n un nombre impair de N bits
$\oplus$ le OU exclusif et $\ast$ la multiplication modulo n

Il envoie ensuite au dispositif réalisant le déchiffrement les (q+1) $y_i$ blocs du chiffré.

Le dispositif réalisant le déchiffrement du message effectue le calcul suivant sur chaque bloc $y_i$ :

$$D(y_i) = g^4(y_i) \oplus K \bmod n = x_i,$$

pour réaliser le déchiffrement du bloc $y_i$,
    avec $g(y) = (y \ast K^{-1} \bmod n) \oplus K$.
Il reconstitue enfin le message $M = x_1 \mid x_2 \mid ... \mid x_{i+1}$

Une seconde variante de la présente invention a pour objet de proposer un deuxième mode de réalisation de chiffrement symétrique, utilisant des ressources normalement dévolues à la cryptographie à clef publique, travaillant sur deux registres de N bits contenant les blocs du message à chiffrer.

Le dispositif réalisant le chiffrement d'un message de longueur L réalise un découpage comme cela a été décrit précédemment.

Pour un message de longueur L = (q $*$ N + r) bits, avec r < N, il découpe ce message en q+1 blocs, soit q blocs de longueur N bits et un bloc de r bits. Il complète le (q+1) $^{iéme}$ bloc avec des zéros, puis il chiffre chaque bloc $x_i$ en effectuant le calcul suivant :

$$E(x_i, x_{i+1}) = f^8(x_{i,}, x_{i+1})$$

avec :

$f(x_i, x_{i+1}) = y_i, y_{i+1}$
où $y_i = x_{i+1}$
$y_{i+1} = x_i \oplus ((y_i \oplus K_2) * K_1 \bmod n)$
$K_1$ et $K_2$ représentant les clefs secrètes sur N bits
n un nombre impair de N bits
$\oplus$ le ou exclusif et $*$ la multiplication modulo n

Il envoie ensuite au dispositif réalisant le déchiffrement les (q+1) $y_i$ blocs du chiffré.
Le dispositif réalisant le déchiffrement du message effectue le calcul suivant sur chaque bloc $y_i$ :

$$D(y_i, y_{i+1}) = g^8(y_i, y_{i+1})$$

avec :

$g(y_i, y_{i+1}) = x_i, x_{i+1}$
où $x_{i+1} = y_i$
$x_i = y_{i+1} \oplus ((x_{i+1} \oplus K_2) * K_1 \bmod n)$
$= y_{i+1} \oplus ((y_i \oplus K_2) * K_1 \bmod n)$

Il reconstitue enfin le message $M = x_1 \mid x_2 \mid ... \mid x_{q+1}$
A titre d'exemple pour mieux comprendre le traitement, dans le cas ou l'on procéderait à deux interactions de la fonction f, on aurait :

$$f^2(x_i, x_{i+1}) = f(x_{i+1}, x_i \oplus ((x_{i+1} \oplus K_2) * K_1 \bmod n)$$

$$= y_i, y_{i+1}$$

$$= x_i \oplus ((x_{i+1} \oplus K_2) * K_1 \bmod n),$$

$$x_{i+1} \oplus ((y_i \oplus K_2) * K_1 \bmod n)$$

Le procédé selon l'invention permet en outre de réaliser du hachage de messages, en vue par exemple de l'appliquer au calcul de signatures électroniques, ou à la mise en oeuvre de protocoles à clef secrète tels que définis ci dessus.
Il s'agit par exemple d'utiliser les deux fonctions de chiffrement des algorithmes précédemment décrit pour effectuer le hachage de messages de la façon suivante :
Selon une première variante :

$$E(x_i) = f^4(x_i) \oplus K \bmod n$$

① On calcule le chiffré $y_1$ du premier bloc $x_1$ du message : $y_1 = E(x_1)$
② On effectue pour le reste des blocs $x_i$ du message le calcul suivant :

$$y_i = E(x_i \oplus y_{i-1}) \oplus y_{i-1}$$

et on prend le dernier bloc comme valeur haché du message.

Selon une seconde variante :

$$E(x_i, x_{i+1}) = f^8(x_{i,}, x_{i+1})$$

① On calcule le chiffré $(y_1, y_2)$ des deux premiers blocs $(x_1, x_2)$ du message : $y_1, y_2 = E(x_1, x_1)$
② On effectue pour le reste des paires de blocs $(x_i, x_{i+1})$ du message le calcul suivant :

$$y_i, y_{i+1} = E(x_i \oplus y_{i-2}, x_{i+1} \oplus y_{i-1}) \oplus (y_{i-2}, y_{i-1})$$

et on prend le dernier bloc comme valeur hachée du message.

Ainsi l'invention permet d'offrir des protocoles de chiffrement à clef secrète durcis grâce à l'introduction dans les dispositifs échangeant des messages de circuits de traitement normalement dévolus à la cryptographie à clef publique.

## Revendications

1. Procédé pour la mise en oeuvre d'un protocole à clef secrète entre un premier et un deuxième dispositifs de traitement $(A_j, A_k)$, l'un d'entre-eux au moins étant un support de mémorisation portable, comprenant les étapes suivantes:

    - équiper les dispositifs d'un circuit de traitement numérique apte à réaliser des opérations de type calcul modulaire pour la mise en oeuvre d'opérations telles que la multiplication modulo n,
    - utiliser ce circuit de traitement pour mettre en oeuvre une fonction de chiffrement à clef secrète composée d'une succession d'opérations réversibles comportant au moins la combinaison de deux opérations, l'une de type calcul modulaire et l'autre relevant de la logique binaire,
    - appliquer cette fonction soit sur des messages destinés à être transmis pour les chiffrer ou les signer, soit sur des messages reçus pour les déchiffrer,

    le circuit de traitement numérique réalisant préalablement à tout traitement un découpage en $x_i$ blocs de N bits,
    caractérisé en ce que
    l'opération de type calcul modulaire est une permutation mettant en oeuvre une multiplication modulaire et l'autre opération relevant de la logique binaire une opération logique OU-exclusif, la combinaison de ces opérations étant définie par une fonction f de chiffrement à clef secrète définie par la relation :

    $$f(x_i) = (x_i \oplus K_2) * K_1 \bmod n$$

    dans laquelle :

    $x_i$ représente un bloc de N bits du message,
    $K_1$ et $K_2$ représentent une première et une deuxième clefs secrètes sur N bits,
    n un nombre impair de N bits,
    $\oplus$ une opération OU exclusif,
    $*$ une opération de multiplication modulo n,

    et en ce que

    - lorsqu'un dispositif envoie des messages, il opère sur le message un premier traitement consistant à appliquer sur chaque bloc $x_i$ la fonction f de façon itérative.

2. Procédé selon la revendication 1, caractérisé en ce que, le nombre d'itération p est au moins égal à 4.

3. Procédé selon la revendication 1 ou 2, caractérisé en ce que les dispositifs ($A_j$, $A_k$) communiquent entre-eux selon le protocole suivant :

- au préalable le premier dispositif (Aj) découpe le message en q+1 blocs de N bits
- le premier dispositif ($A_j$) chiffre chaque bloc $x_i$ dit message M de sorte que chaque bloc chiffré $y_i$ du message est tel que :

$$E(x_i) = f^p(x_i) \oplus K \bmod n = y_i,$$

p étant supérieur ou égal à 4,
K représentant une troisième clé secrète sur N bits,

- le premier dispositif (Aj) envoie les q+1 blocs $y_i$ au deuxième dispositif ($A_k$),
- le premier dispositif ($A_k$) effectue sur chaque $y_i$ l'opération suivante :

$$D(y_i) = g^p(y_i) \oplus K \bmod n = x_i,$$

pour réaliser le déchiffrement du bloc $y_i$,
de manière à déchiffrer $y_i$ et à obtenir $x_i$, la fonction g étant la fonction inverse de f telle que :

$$g(y_i) = (y_i * K^{-1} \bmod n) \oplus K,$$

$y_i$ représentant un bloc de N bits du chiffré.

4. Procédé selon l'une quelconque des revendications 1 à 3,
caractérisé en ce que le circuit de traitement est utilisé pour réaliser du hachage de message et en ce que alors,
lorsque le premier dispositif ($A_j$) hache un message M de longueur L, le circuit réalise les étapes suivantes :

$$E(x_i) = f^4(x_i) \oplus K \bmod n$$

① On calcule le chiffré $y_1$ du premier bloc $x_1$ du message : $y_1 = E(x_1)$
② On effectue pour le reste des blocs $x_i$ du message le calcul suivant :

$$Y_i = E(x_i \oplus y_{i-1}) \oplus y_{i-1}$$

et on prend le dernier bloc comme valeur haché du message.

5. Procédé pour la mise en oeuvre d'un protocole à clef secrète entre un premier et un deuxième dispositifs de traitement, l'un d'entre-eux au moins étant un support de mémorisation portable, comprenant les étapes suivantes :

- équiper les dispositfs d'un circuit de traitement numérique apte à réaliser des opérations de type calcul modulaire pour la mise en oeuvre d'opérations telles que la multiplication modulo n,
- utiliser ce circuit de traitement pour mettre en oeuvre une fonction de chiffrement à clef secrète composée d'une succession d'opérations réversibles comportant au moins la combinaison de deux opérations, l'une de type calcul modulaire et l'autre relevant de la logique binaire,
- appliquer cette fonction soit sur des messages destinés à êtres transmis pour les chiffrer ou les signer, soit sur des messages reçus pour les déchiffrer,

caractérisé en ce qu'un message est découpé en q+1 blocs $x_i$ de N bits, en ce qu'un bloc xi du message est placé dans un premier registre, le bloc suivant $x_{i+1}$ est placé dans un deuxième registre et en ce que le dispositif envoie des messages chiffrés après avoir opéré le traitement consistant à appliquer une fonction f telle que

$$E(x_i, x_{i+1}) = f^p(x_i, x_{i+1})$$

avec $f(x_i, x_{i+1}) = y_i, y_{i+1}$
où $y_i = x_{i+1}$
$y_{i+1} = x_i \oplus ((y_i \oplus K_2) * K_1 \bmod n)$

le dispositif envoie les q+1 bloc $y_i$ au deuxième dispositif ($A_k$) le deuxième dispositif ($A_k$) effectue sur chaque bloc $y_i$ l'opération suivante :

$$D(y_i, y_{i+1}) = g^p(y_i, y_{i+1})$$

de manière à déchiffrer $(y_i, y_{i+1})$ et à obtenir $(x_i, x_{i+1})$, la fonction g étant la fonction inverse de f, celle fonction étant définie par :

$$g(y_i, y_{i+1}) = x_i, x_{i+1}$$

où $x_{i+1} = y_i$
$x_i = y_{i+1} \oplus ((x_{i+1} \oplus K_2) * K_1 \bmod n) = y_{i+1} \oplus ((y_i \oplus K_2) * K_1 \bmod n)$

le deuxième dispositif ($A_k$) reconstituant ainsi le message.

6. Procédé selon la revendication 4,
caractérisé en ce que le circuit de traitement est utilisé pour réaliser du hachage de message et en ce que alors, lorsque le premier dispositif ($A_j$) hache un message M de longueur L, le circuit réalise les étapes suivantes :

$$E(x_i, x_{i+1}) = f^8(x_i, x_{i+1})$$

①On calcule le chiffré $(y_1, y_2)$ des deux premiers blocs $(x_1, x_2)$ du message : $y_1, y_2 = E(x_1, x_1)$.
②On effectue pour le reste des paires de blocs $(x_i, x_{i+1})$ du message le calcul suivant :

$$y_i, y_{i+1} = E(x_i \oplus y_{i-2}, x_{i+1} \oplus y_{i-1}) \oplus (y_{i-2}, y_{i-1})$$

et on prend le dernier bloc comme valeur haché du message.

7. Procédé selon l'une quelconque des revendications précédentes, caractérisé en ce que le calcul modulaire porte sur un grand nombre.

8. Procédé selon l'une quelconque des revendications précédentes , caractérisé en ce que les dispositifs de traitement sont des cartes à puce, des cartes PCMCIA, des badges, des cartes sans contact, tout autre appareil portable ou tout dispositif équipé d'un module de sécurité possédant les mêmes fonctionnalités que ces dits appareils portables.

9. Procédé selon l'une quelconque des revendications précédentes , caractérisé en ce que la communication entre chaque dispositifs de traitement est réalisée par un échange de signaux électroniques.

10. Procédé selon l'une quelconque des revendications précédentes , caractérisé en ce que la communication entre chaque dispositif de traitement est réalisée par un échange d'ondes radio ou de signaux infrarouges.

**Claims**

1. A method of applying a protocol with a secret key between a first and a second processing device ($A_j$, $A_k$), at least one of which is a portable memory medium, consisting of the following steps:

- the devices are provided with a digital processing circuit designed to perform operations of the modular calculation type for performing operations such as modulo-n multiplication,
- this processing circuit is used to apply an encryption function with a secret key consisting of a succession of reversible operations involving at least the combination of two operations, one being of the modular calculation type and the other being based on binary logic,
- this function is applied either to messages intended for sending in order to encrypt them or sign them or to messages received in order to decipher them,

the digital processing circuit applying beforehand a process of cutting into x blocks of N bits,

characterised in that the operation of the modular calculation type is a permutation using a modular multiplication and the other operation uses binary logic in the form of an exclusive-OR logic operation, the combination of these operations being defined by an encryption function f with a secret key defined by the equation:

$$f(x_i) = (x_i \oplus K_2) * K_1 \bmod n$$

in which:

$x_i$ represents a block of N bits of the message,
$K_1$ and $K_2$ represent first and second secret keys over N bits,
n is an uneven number of N bits,
$\oplus$ is an exclusive-OR operation,
* is a modulo-n multiplication operation,

and in that

- when a device is sending messages, it applies a first processing run to the message, which consists in iteratively applying the function f to each block $x_i$.

2. A method as claimed in claim 1, characterised in that the number of iterations p is at least equal to 4.

3. A method as claimed in claim 1 or 2, characterised in that the devices $(A_j; A_k)$ communicate with each other using the following protocol:

- firstly, the first device $(A_j)$ cuts the message up into q+1 blocks of N bits,
- the first device $(A_j)$ encrypts each block $x_i$ of the message M so that each encrypted block $y_i$ of the message is such that:

$$E(x_i) = f^p(x_i) \oplus K \bmod n = y_i,$$

where p is greater than or equal to 4,
K represents a third secret key over N bits,

- the first device $(A_j)$ sends the q+1 blocks $y_i$ to the second device $(A_k)$,
- the second device $(A_k)$ applies the following operation to each $y_i$:

$$D(y_i) = g^p(y_i) \oplus K \bmod n = x_i$$

in order to decipher the block $y_i$
so that $y_i$ is deciphered and $x_i$ is obtained, the function g being the inverse function of f so that:

$$g(y_i) = (y_i * K^{-1} \bmod n) \oplus K,$$

where $y_i$ represents a block of N bits of the ciphertext.

4.  A method as claimed in any one of claims 1 to 3, characterised in that the processing circuit is used to hash the message and in that, when the first device ($A_j$) is hashing a message M of a length L, the circuit runs the following steps:

$$E(x_i) = f^4(x_i) \oplus K \bmod n$$

① the ciphertext $y_1$ of the first block $x_1$ of the message is calculated: $y_1=E(x_1)$
② the following calculation is performed for the remaining blocks $x_i$ of the message:

$$y_i=E(x_i \oplus y_{i-1}) \oplus y_{i-1}$$

and the last block is taken as the hashed value of the message.

5.  A method for operating a protocol with a secret key between first and second processing devices, at least one of which is a portable memory medium, consisting of the following steps:

    •   the devices are provided with a digital processing circuit designed to peform operations of the modular calculation type for running operations such as modulo-n multiplication,
    •   this processing circuit is used to apply an encryption function with a secret key consisting of a succession of reversible operations including at least the combination of two operations, one of the modular calculation type and the other based on binary logic,
    •   this function is applied either to the messages intended to be transmitted in order to encrypt them or sign them, or to messages received in order to decipher them,

    characterised in that a message is cut up into q+1 blocks $x_i$ of N bits, in that a block $x_i$ of the message is placed in a first register and the next block $x_{i+1}$ is placed in a second register and in that the device sends the encrypted messages after applying processing which consists in applying a function such that:

    $$E(x_i, x_{i+1})=f^p(x_i, x_{i+1})$$

    with $f(x_i, x_{i-1}) = y_i, y_{i-1}$
    where $y_i = x_{i-1}$
    $y_{i+1}=x \oplus ((y_i \oplus K_2) * K_1 \bmod n)$

    the device sends the q+1 blocks $y_i$ to the second device ($A_k$),
    the second device ($A_k$) applies the following operation to each block $y_i$:

    $$D(y_i, y_{i+1}) = g^p(y_i, y_{i+1})$$

    so as to decipher ($y_i, y_{i+1}$) and obtain ($x_i, x_{i+1}$), the function g being the inverse function of f, this function being defined by:

    $$g(y_i, y_{i+1}) = x_i, x_{i+1}$$

    where $x_{i+1} = y_i$
    $x_i = y_{i+1} \oplus ((x_{i+1} \oplus K_2)*K_1 \bmod n) = y_{i+1} \oplus ((y_i \oplus K_2)*K_1 \bmod n)$ the second device ($A_k$) thereby reconstituting the message.

6.  A method as claimed in claim 4, characterised in that the processing circuit is used to hash the message and in that when the first device ($A_j$) hashes a message M of a length L, the circuit runs the following steps:

$$E(x_i, x_{i+1}) = f^8(x_i, x_{i+1})$$

① the ciphertext $(y_1,y_2)$ for the first two blocks $(x_1,x_2)$ of the message is calculated: $y_1,y_2=E(x_1,x_2)$,
② the following calculation is performed for the remaining pairs of blocks $(x_i, x_{i+1})$ of the message:

$$y_i,y_{i+1}=E(x_i \oplus y_{i-2}, x_{i+1} \oplus y_{i-1}) \oplus (y_{i-2}, y_{i-1})$$

and the last block is taken as the hashed value of the message.

7. A method as claimed in any one of the preceding claims, characterised in that the modular calculation relates to a large number.

8. A method as claimed in any one of the preceding claims, characterised in that the processing devices are chip cards, PCMCIA cards, badges, contactless cards, any other portable device or any device fitted with a security module having the same functions as those of said portable devices.

9. A method as claimed in any one of the preceding claims, characterised in that the communication between each of the processing devices is effected by an exchange of electronic signals.

10. A method as claimed in any one of the preceding claims, characterised in that the communication between each processing device is effected by an exchange of radio waves or infrared signals.

**Patentansprüche**

1. Verfahren zum Umsetzen eines Protokolls mit Geheimverschlüsselung zwischen einer ersten und zweiten Handhabungsvorrichtung ($A_j$, $A_k$), derart, daß mindestens eine der beiden eine portable Speichereinheit unterstützt, enthaltend die folgenden Schritte:

Ausstatten der Vorrichtungen mit einer numerischen Bearbeitungsschaltung zum Realisieren von Betriebsschritten vom Typ mit modularer Berechnung für das Umsetzen von Betriebsschritten, wie Multiplikation Modulo n,

Einsetzen der Bearbeitungsschaltung zum Umsetzen einer Funktion für das Chiffrieren mit einer Geheimverschlüsselung, bestehend aus einer Folge reversibler Betriebsschritte und enthaltend zumindest die Kombination von zwei Betriebsschritten, derart, daß der eine vom Typ mit modularer Berechnung ist und der andere die Binärlogik betrifft,

Anwenden dieser Funktion einerseits auf zu übertragende Meldungen für deren Chiffrieren oder deren Signieren und andererseits auf empfangene Meldungen für deren Dechiffrierung, derart, daß

die numerische Bearbeitungsschaltung vorab zu der Gesamtbearbeitung eine Aufteilung in $x_i$ Blöcke mit N-Bit realisiert,

dadurch gekennzeichnet, daß
der Betriebsschritt vom Typ mit modularer Berechnung eine Permutation zum Umsetzen einer modularen Multiplikation ist und der andere Betriebsschritt hinsichtlich der Binärlogik einen Exklusiv-ODER-Logikbetriebsschritt darstellt, die Kombination dieser Betriebsschritte durch eine Funktion f für das Chiffrieren mit ener Geheimverschlüsselung darstellt, die definiert ist, durch die Relation:

$$f(x_i) = (x_i \oplus K_2) * K_1 \bmod n$$

derart, daß

$x_i$ ein Block von N-Bit der Meldung darstellt,

$K_1$ und $K_2$ eine erste und zweite Geheimverschlüsselung für N-Bit darstellen

n eine ungerade Zahl der N-Bit ist,

⊕ eine Exklusiv-ODER-Betriebsschritt ist,

\* ein Betriebsschritt für die Multiplikation Modulo n ist, und derart, daß

dann, wenn eine Vorrichtung Meldungen sendet, sie bei der Meldung eine erste Verarbeitung durchführt, die aus einer Anwendung bei jedem Block $x_i$ der Funktion f in iterativer Weise besteht.

2. Verfahren nach Anspruch 1, dadurch gekennzeichnet, daß die Iterationszahl p mindestens gleich 4 ist.

3. Verfahren nach Anspruch 1 oder 2, dadurch gekennzeichnet, daß die Vorrichtungen ($A_j$, $A_k$) miteinander gemäß dem folgenden Protokoll kommunizieren:

die erste Vorrichtung (Aj) unterteilt vorab die Meldung in q+1 Blöcke von N-Bit,

die erste Vorrichtung (Aj) chiffriert jeden Block $x_i$ der Meldung M derart, daß für jeden chiffrierten Bock $y_i$ der Meldung gilt:

$$E(x_i) = f^P(x_i) \oplus K \bmod n = y_i$$

derart, daß

p einen Wert größer gleich 4 aufweist,

K eine dritte Geheimverschlüsselung für N-Bit darstellt, ferner

die erste Vorrichtung (Aj) die q+1 Blöcke $Y_i$ zur zweiten Vorrichtung ($A_k$) sendet,

die zweite Vorrichtung ($A_k$) für jeden Block $y_i$ den folgenden Betriebsschritt durchführt:

$$D(y_i) = g^P(y_i) \oplus K \bmod n = x_i,$$

damit die Dechiffrierung des Blocks $y_i$ derart durchgeführt wird, daß $y_i$ dechiffriert wird und $x_i$ erhalten wird, und zwar mit der Funltion g als inverser Funktion zur Funktion f:

$$g(y_i) = (y_i * K^{-1} \bmod n) \oplus K,$$

derart, daß
$y_i$ einen Block der chiffrierten N-Bits darstellt.

4. Verfahren nach einem der Ansprüche 1 bis 3, dadurch gekennzeichnet, daß die Bearbeitungsschaltung zum Realisieren der Aufteilung der Meldung eingesetzt wird und daß bei Durchführen der Aufteilung einer Meldung M der Länge L durch die erste Vorrichtung ($A_j$) die Schaltung die folgenden Teilschritte realisiert:

$$E(x_i) \, f^{-1}(x_i) \oplus \bmod n$$

① Berechnen der Chiffrierung $y_1$ des ersten Blocks $x_1$ der Meldung: $y_1 = E(x_1)$

② Durchführen der nachfolgenden Berechnung für den Rest des Blocks $x_i$ der Meldung:

$$y_i = E(x_i \oplus y_{i-1}) \oplus y_{i-1}$$

derart, daß

der letzte Block als Aufteilwert der Meldung herangezogen wird.

5. Verfahren zum Umsetzen eines Protokolls mit Geheimverschlüsselung zwischen einer ersten und zweiten Handhabungsvorrichtung ($A_j$, $A_k$), derart, daß mindestens eine der beiden eine portable Speichereinheit unterstützt, enthaltend die folgenden Schritte:

Ausstatten der Vorrichtungen mit einer numerischen Bearbeitungsschaltung zum Realisieren von Betriebsschritten vom Typ mit modularer Berechnung für das Umsetzen von Betriebsschritten wie Multiplikation Modulo n,

Einsetzen der Bearbeitungsschaltung zum Umsetzen einer Funktion für das Chiffrieren mit einer Geheimverschlüsselung, bestehend aus einer Folge reversibler Betriebsschritte und enthaltend zumindest die Kombination von zwei Betriebsschritten, derart, daß der eine vom Typ mit modularer Berechnung ist und der andere die Binärlogik betrifft,

Anwenden dieser Funktion einerseits auf zu übertragende Meldungen für deren Chiffrieren oder deren Signieren und andererseits auf empfangene Meldungen für deren Dechiffrierung,

dadurch gekennzeichnet, daß
eine Meldung in q+1 Blöcke $x_i$ von N-Bit aufgeteilt wird und daß ein Block $x_i$ der Meldung in einem ersten Register plaziert ist, der nachfolgende Block $x_{i+1}$ in einem zweiten Register plaziert ist und daß die Vorrichtung die Meldungen nach Durchführen der Bearbeitung sendet, die aus der Anwendung einer Funkltion f besteht, derart, daß

$$E(x_i, x_{i-1}) = f^p (x_i, x_{i-1})$$

mit $f(x_i, x_{i-1}) = y_i, y_{i-1}$
oder $y_i = x_{i+1}$
$Y_{i+1} = x_i \oplus ((y_i \oplus K_2)^{K_1} \bmod n)$,

ferner die Vorrichtung die q+1 Blöcke $y_i$ zur zweiten Vorrichtung ($A_k$) sendet, und die zweite Vorrichtung ($A_k$) bei jedem Block den folgenden Betriebsschritt durchführt:

$$D(y_i, y_{i-1}) = g^p (y_i, y_{i-1})$$

damit $(y_i, y_{i-1})$ dechiffriert und $(x_i, x_{i+1})$ erhalten wird mit der Funktion g als inverse Funktion zu f, derart, daß diese Funktion definiert ist zu:

$$g(y_i, y_{i+1}) = x_i, x_{i+1}$$

oder $x_{i+1} = y_i$
$x_i = y_{i+1} \oplus ((x_{i+1} \oplus K_2)^* K_1 \bmod n) = y_{i+1} \oplus ((y_i \oplus K_2)^* K_1 \bmod n)$

wodurch die zweite Vorrichtung ($A_k$) hierdurch die Meldung rekonstruiert.

6. Verfahren nach Anspruch 4, dadurch gekennzeichnet, daß die Bearbeitungsschaltung zum Realisieren des Aufteilens der Meldung eingesetzt wird und daß beim Aufteilen einer Meldung M der Länge L durch die erste Vorrichtung ($A_j$) diese Schaltung die folgenden Teilschritte realisiert:

$$E(x_i, x_{i+1}) = f^8(x_i, x_{i-1})$$

① Berechnen der Chiffrierung $(y_1, y_2)$ mit zwei ersten Blöcken $(x_1, x_2)$ der Meldung: $y_1, y_2 = E(x_1, x_1)$.

② Durchführen der folgenden Berechnung für den Rest der Blockpaare $(x_i, x_{i+1})$ der Meldung:

$$y_i, y_{i+1} = E(x_i \oplus y_{i-2}, x_{i-1} \oplus y_{i-1}) \oplus (y_{i-2}, y_{i-1})$$

und Heranziehen des letzten Blocks als Aufteilungswert der Meldung.

7. Verfahren nach einem der vorangehenden Ansprüche, dadurch gekennzeichnet, daß das modulare Rechnen eine große Zahl betrifft.

8. Verfahren nach einem der vorangehenden Ansprüche, dadurch gekennzeichnet, daß die bearbeitenden Vorrichtungen Chipkarten sind, sowie PCMCIA-Karten Abzeichen- bzw. Ansteckmarken, kontaktlose Karten, jedwedge andere portable Ausrüstungsgegenstände oder jedwedge Vorrichtung mit einem Sicherungsmodul mit denselben Funktionalitäten wie die genannten tragbaren Ausrüstungsgegenstände.

9. Verfahren nach einem der vorangehenden Ansprüche, dadurch gekennzeichnet, daß die Kommunikation zwischen den bearbeitenden Vorrichtung durch den Austausch elektrischer Signale realisiert wird.

10. Verfahren nach einem der vorangehenden Ansprüche, dadurch gekennzeichnet, daß die Kommunikation zwischen den bearbeitenden Vorrichtungen durch den Austausch von Funkwellen und Infrarotsignalen realisiert wird.

EP 0 800 691 B1

**17**

| Memoire | | | | C.P.U. Puissante | **11** |

- EEPROM ou EPROM **15**
- RAM **13**
- ROM **14**

↔

**16**

↔

- Multiplication, Addition
- Exponentiation
- Réduction modulaire
- Inversion modulaire

*Interface de Communication* **10**

FIG 1

**Déchiffrement**

DISPOSITIF $A_j$

**Découper le chiffré en i blocs $y_i$**

**Appliquer $g^P$ sur chaque bloc**

**Chiffrement**

DISPOSITIF $A_k$

**Découper le message m en i blocs $x_i$**

**Appliquer $f^P$ sur chaque bloc**

**Envoyer le chiffré**

**FIG 2**

EP 0 800 691 B1